**Europäisches Patentamt**

**European Patent Office**

**Office européen des brevets**

(19)

(11) Veröffentlichungsnummer: **0 290 966 B1**

(12) ## EUROPÄISCHE PATENTSCHRIFT

(45) Veröffentlichungstag der Patentschrift: **08.04.92**

(51) Int. Cl.⁵: **B60P 3/00**, B64F 1/32

(21) Anmeldenummer: **88107253.2**

(22) Anmeldetag: **05.05.88**

(54) **Hubfahrzeug zur Containerverladung in Flugzeuge.**

(30) Priorität: **12.05.87 DE 3715820**

(43) Veröffentlichungstag der Anmeldung:
**17.11.88 Patentblatt 88/46**

(45) Bekanntmachung des Hinweises auf die
Patenterteilung:
**08.04.92 Patentblatt 92/15**

(84) Benannte Vertragsstaaten:
**AT BE CH DE ES GB GR IT LI NL**

(56) Entgegenhaltungen:
**EP-A- 0 018 660**
**EP-A- 0 041 421**
**DE-A- 2 033 449**
**DE-A- 2 130 968**

(73) Patentinhaber: **EISENWERK FRIEDRICH
SCHRÖDER GMBH & CO. KG
Gneisenaustrasse 35
W-8000 München 50(DE)**

(72) Erfinder: **Schröder, Peter, Dipl.-Ing.
Münchnerstrasse 7
W-8023 Pullach im Isartal(DE)**

(74) Vertreter: **KUHNEN, WACKER & PARTNER
Alois-Steinecker-Strasse 22 Postfach 1553
W-8050 Freising(DE)**

EP 0 290 966 B1

## Beschreibung

Die Erfindung betrifft ein Hubfahrzeug zur Containerverladung in Flugzeuge, nach dem Oberbegriff des Anspruchs 1.

Ein derartiges Hubfahrzeug, wie es auch aus der EP-A-0 018 660 bekannt geworden ist, ist insbesondere auf Zivilflughäfen im Einsatz. Derartige Hubfahrzeuge dienen dazu, die Flugzeuge, die in ihren Parkpositionen stehen, schnell und störungssicher durch entsprechende Ladeluken im Rumpf mit Luftfracht, Gepäck, Frischwasser, Bordverpflegung und dergleichen zu versorgen.

Hierbei werden zum wirtschaftlichen Einsatz der Flugzeuge immer kürzere Bodenzeiten gefordert, d.h., alle Ent- und Versorgungsvorgänge, zu denen auch das Betanken, Entleeren der Toilettenbehälter, Aufladen der elektrischen Akkumulatoren, Einsteigen der Passagiere, Reinigung des Passagierraums und dergleichen gehören, sollten in kürzester Zeit und möglichst gleichzeitig erfolgen. Dies wiederum hat zur Folge, daß die für die Ent- und Versorgungsvorgänge benötigten Fahrzeuge teilweise nur wenige Zentimeter nebeneinander an ganz bestimmten Stellen am Flugzeugrumpf andocken müssen. Hierbei ergibt sich, daß der um das Flugzeug herum zur Verfügung stehende Rangierbereich zum einen gewissen Restriktionen unterworfen ist, d.h., bestimmte Bereiche im Außenbezirk des Flugzeugs dürfen nicht angefahren oder unterfahren werden, und zum anderen dadurch verringert ist, daß die Flugzeuge selbst zumeist dicht nebeneinander in ihren Parkpositionen stehen.

Hieraus ergibt sich die Notwendigkeit, daß die eingesetzten Versorgungsfahrzeuge möglichst wendig und äußerst präzise manipulierbar sein müssen, um die Versorgung eines gelandeten Flugzeugs in minimaler Zeit störungsfrei abwickeln zu können, so daß ein reibungsloser und planmäßiger Flugbetrieb mit hoher Umschlagquote sichergestellt ist.

Von wesentlicher Bedeutung ist hierbei eine exakte Manövrierbarkeit der Versorgungsfahrzeuge, um diese schnell, präzise und sicher an die entsprechenden Luken am Flugzeugrumpf heranbringen zu können. Um die Manövrierbarkeit der Versorgungsfahrzeuge zu erhöhen, sind unterschiedliche Spezialfahrzeuge bekannt geworden. So zeigt die DE-A-21 30 968 eine Frachtladevorrichtung bestehend aus einer auf einem Chassis ruhenden Hubplattform und einer verstellbaren Übergabeplattform, und die DE-A-20 33 449 zeigt einen Omnibus für den Flughafen-Vorfeldverkehr, bei dem über eine vertikal hochschwenkbare und ausfahrbare Rampe Passagiere aus dem Omnibus direkt das Flugzeug betreten können. Nachteilig bei der Frachtladevorrichtung gemäß der DE-A-21 30 968 und auch des Omnibus gemäß der DE-A-20 33 449 ist, daß zu ihrer Realisierung Spezialbauten nötig sind. Dies hat die weiter unten noch erläuterten Nachteile zur Folge.

Um die Manövrierfähigkeit der Versorgungsfahrzeuge entscheidend zu verbessern, ist es weiterhin bekannt, eine andere Art von Spezialfahrzeugen zu konzipieren, bei denen - im Gegensatz zu Serienfahrzeugen wie Pkw und Lkw - die Vorderachse starr und die hintere lenkbar gestaltet ist. Dieses Prinzip hat sich beispielsweise auch bei Gabelstaplern in der Praxis durchgesetzt.

Darüberhinaus ist es bekannt, daß ein Pkw oder auch Lkw sich leichter und genauer in eine Parklücke oder eine enge Einfahrt manövrieren läßt, wenn dabei rückwärts gefahren wird.

Allerdings werden die verschiedenen Versorgungsfahrzeuge für Flugzeuge, wie z.B. die Bordküchen-Hubfahrzeuge, aus Gründen der Wirtschaftlichkeit auf serienmäßigen Lkw-Fahrgestellen aufgebaut. D.h., man versucht, den Unterbau, also Fahrgestell, Motor und Fahrerkabine serienmäßiger Lastkraftwagen zu verwenden, die dann lediglich bezüglich der Ladeplattform oder des Koffers samt Hubvorrichtung für diesen speziellen Einsatz voll umgerüstet werden müssen. Ein derartiges Hubfahrzeug ist beispielsweise aus der eingangs erwähnten gattungsgemäßen EP-A-0 018 660 oder auch aus der DE-A-11 00 906 bekannt. Der Grund für dieses Bestreben liegt darin, daß es erheblich billiger ist, einen vorhandenen serienmäßigen Unterbau zu verwenden, als für einen speziellen Einsatzfall ein von Grund auf neues Fahrzeug zu konzipieren und herzustellen. Weiterhin trägt diese Maßnahme zur Störungssicherheit bei, da übliche Serienfahrzeuge ausgereifte und vielfach bewährte Konstruktionen sind, wobei überdies die Gesamtkosten vergleichsweise gering sind, da infolge der hohen Stückzahlen für den serienmäßigen Fahrzeugunterbau keine allzu hohen Kosten anfallen.

Ein weiterer Grund dafür, auf serienmäßige Untergestelle zurückzugreifen liegt darin, daß alle Versorgungsfahrzeuge für den öffentlichen Straßenverkehr zugelassen sein müssen und an diesem ohne nennenswerte Behinderungen wie ein normaler Lastkraftwagen teilnehmen können müssen. Sonderfahrzeuge, wie beispielsweise die Frachtladevorrichtung gemäß der eingangs erwähnten DE-A-21 30 968, oder der Omnibus gemäß der eingangs erwähnten DE-A-20 33 449, oder auch andere Fahrzeuge mit speziellen Aufbauten oder gar einer Hinterachslenkung sind von einer derartigen Zulassung für den öffentlichen Straßenverkehr ausgeschlossen; ihr Einsatzbereich ist auf das Flughafen-Vorfeld beschränkt. Hierdurch wird jedoch ihre Mobilität erheblich beeinträchtigt, da beispielsweise ein Flugzeug, das wegen Nebels umgeleitet worden ist, nicht mehr von einem derartigen Versorgungsfahrzeug über Land angefahren und versorgt werden kann.

Gerade die Verwendung von Versorgungsfahrzeugen mit Hinterachslenkung wäre jedoch aus den weiter oben genannten Gründen äußerst wünschenswert. Dem steht jedoch das Problem gegenüber, daß auf dem Markt keine Serien-Lkw-Fahrgestelle mit starrer Vorderachse und lenkbaren Hinterrädern zur Verfügung stehen und ein entsprechender Umbau - wenn überhaupt - nur mit erheblichem finanzellem Aufwand zu bewerkstelligen wäre.

Die an sich dem ersten Anschein nach einfachste Lösung dieses Problems bestünde darin, die Versorgungsfahrzeuge im Rückwärtsgang an die entsprechende Luke im Rumpf des Flugzeugs heranzumanövrieren. Aus Gründen der Sicherheit ist es jedoch seit langem grundsätzlich verboten, mit einem Versorgungsfahrzeug rückwärts an ein Flugzeug heranzufahren, weil dem Fahrer durch den Kofferaufbau bzw. durch auf der Ladeplattform gelagertes Gut eine uneingeschränkte Sicht nach hinten verwehrt ist, so daß die Gefahr einer Flugzeugbeschädigung bei einem Heranmanövrieren im Rückwärtsgang viel zu groß wäre.

Es ist daher Aufgabe der vorliegenden Erfindung, ein Hubfahrzeug zur Containerverladung in Flugzeuge derart auszubilden, daß auf alle Vorteile eines serienmäßigen Lkw-Fahrgestells nicht verzichtet werden braucht und gleichzeitig eine Manövrierfähigkeit erhalten wird, die der eines Fahrzeugs mit Hinterachslenkung gleichkommt.

Die Lösung dieser Aufgabe erfolgt erfindungsgemäß durch die im Anspruch 1 angegebenen Merkmale.

Erfindungsgemäß ist im Heckbereich des Koffers bzw. der Plattform ein Hilfs-Fahrerstand angeordnet, dessen Betätigungshandhaben mit Blick der Bedienungsperson auf den Bereich hinter dem Hubfahrzeug bedienbar und mit fahrgestellfesten Antriebsaggregaten des Hubfahrzeugs über Ansteuerleitungen verbunden sind. Weiterhin ist die Richtung eines mittels einer Lenkvorrichtung in dem Hilfs-Fahrerstand erzielbaren Lenkausschlags an den lenkbaren Rädern des Fahrgestells bezüglich derjenigen, die mittels einer Lenkvorrichtung in der Fahrerkabine erzielbar ist, invertiert.

Erfindungsgemäß kann die wirtschaftliche Anordnung der Serienelemente eines serienmäßigen Lkw-Fahrgestells beibehalten werden, und zugleich wird die präzise Manövrierfähigkeit durch eine effektive Hinterradlenkung erreicht, wobei kein verbotenes Rückwärtsanfahren an das Flugzeug erfolgt, da die Steuerung des Hubfahrzeugs unter direkter Sichtkontrolle von dem Hilfs-Fahrerstand aus erfolgt. Weiterhin verhält sich das erfindungsgemäße Hubfahrzeug bei Steuerung über den Hilfs-Fahrerstand wie ein echtes Fahrzeug mit Hinterradlenkung, d.h., daß sinngemäß durch Betätigung der Lenkvorrichtung in dem Hilfs-Fahrerstand für einen Lenkausschlag beispielsweise nach rechts an den lenkbaren Vorderrädern des Fahrzeuggestells ein Lenkausschlag erzeugt wird, wie er bei Betätigung der serienmäßigen Lenkvorrichtung in die entgegengesetzte Richtung erzielbar wäre. Hierdurch wird erreicht, daß durch eine Betätigung der Hilfs-Lenkvorrichtung für eine Kurvenfahrt nach rechts tatsächlich auch eine Kurvenfahrt des Hubfahrzeugs nach rechts hervorgerufen wird und umgekehrt.

Die Anordnung eines Hilfs-Fahrerstandes zusätzlich zu der Fahrerkabine ist zwar bekannt, so beispielsweise aus der EP-A-0 041 421. Bei dem fahrbaren Kran gemäß dieser Druckschrift ist in dem Kranbedienungsstand noch eine Zusatzsteuerung für das den Kran tragende Chassis vorgesehen. Hierdurch sollen kleinere Positionskorrekturen direkt von der den Kran bedienenden Person möglich werden. Allerdings betrifft die EP-A-0 041 421 einen fahrbaren Kran und kein Hubfahrzeug zur Containerverladung und weiterhin sind echte Fahr- und Rangiermanöver mit der als Joystick-Steuerung ausgelegten Lenkvorrichtung in dem Kranbedienungsstand nicht möglich und auch nicht vorgesehen.

Vorteilhafte Weiterbildungen der Erfindung ergeben sich aus den Unteransprüchen.

Durch die Ausbildung der Lenkvorrichtung sowohl in der Fahrerkabine als auch dem Hilfs-Fahrerstand jeweils in Form eines Lenkrades sind keinerlei Schwierigkeiten bei der Umstellung des Fahres von der Fahrerkabine auf den Hilfs-Fahrerstand zu erwarten, da dann an beiden Arbeitsplätzen des Fahrers identische Bedienungselemente vorhanden sind.

Gemäß Anspruch 3 ist der Hilfs-Fahrerstand derart in dem Hub-Kofferaufbau integriert, daß er bei Anhebung des Hubkoffers mit angehoben wird. Hieraus ergibt sich der Vorteil, daß auch der Andock-Vorgang des Kofferaufbaus an der Flugzeugluke genau zu beobachten und gegebenenfalls zu steuern ist. Insbesondere für diesen Fall können die Ansteuerleitungen, die in ihrer allgemeinsten Form jede Art der Steuerverbindung umfassen und bei nicht mit angehobenem Hilfs-Fahrerstand auch mechanische Kupplungen umfassen können, als flexible Kabel ausgebildet sein, wie dies für elektrische, hydraulische oder pneumatische Leitungen an sich bekannt ist.

Gemäß Anspruch 4 ist der Hilfs-Fahrerstand zum Laderaum des Koffers hin mit einer Trennwand abgeteilt. Hierdurch wird die Sicherheit für die Bedienungsperson erhöht, da diese während des Betriebes durch diese Trennwand vor dem im Laderaum befindlichen Ladegut geschützt ist, so daß die Bedienungsperson, die sich gegebenenfalls bereits bei der Anfahrt des Hubfahrzeuges zu dem Flugzeug in dem Hilfs-Fahrerstand befindet bei einer scharfen Bremsung nicht durch im Laderaum sich lösende Gegenstände verletzt werden kann. Dadurch, daß diese Trennwand den Hilfs-Fahrerstand nur teilweise abschottet, wird erreicht, daß die Bedienungsperson sich nach erfolgtem Hebevorgang unmittelbar an der Be- und Entladestelle befindet.

Gemäß Anspruch 5 ist der Hilfs-Fahrerstand durch eine Schiebetür von außen her begehbar. Da eine Schiebetür praktisch keine Ausladung hat, kann der Hilfs-Fahrerstand auch unter beengten Parksituationen des Hubfahrzeuges betreten werden.

Gemäß Anspruch 6 weist der Hilfs-Fahrerstand wenigstens ein Seitenfenster auf, so daß die Bedienungsperson des Hilfs-Fahrerstandes ausreichende Sichtverhältnisse wenigstens nach einer Seite hat. Es versteht sich, daß dieses Seitenfenster zusätzlich zu einem Fenster in Fahrtrichtung vom Hilfs-Fahrerstand aus gesehen vorgesehen ist.

Durch das Vorsehen einer separaten elektrischen Beleuchtung in dem Hilfs-Fahrerstand gemäß Anspruch 7 wird einerseits der Komfort für die Bedienungsperson erhöht und andererseits insbesondere bei Nachtbetrieb das Umsteigen vom dem Hilfs-Fahrerstand in den Laderaum des Koffers erleichtert.

Gemäß Anspruch 8 ist der Kofferaufbau des Hubfahrzeuges nur dann anhebbar bzw. absenkbar, wenn die Schiebetür zu dem Hilfs-Fahrerstand geschlossen ist. Hierdurch wird insbesondere die Sicherheit für die Bedienungspersonen erhöht.

Durch die Merkmale der Ansprüche 9 und 10, gemäß denen eine separate Heizung für den Hilfs-Fahrerstand vorgese hen ist, die vorzugsweise in Form einer Standheizung ausgebildet ist, werden die Arbeitsbedingungen für die Bedienungsperson in dem Hilfs-Fahrerstand wesentlich verbessert.

Weitere Einzelheiten, Merkmale und Vorteile der vorliegenden Erfindung ergeben sich aus der nachfolgenden Beschreibung unter Bezugnahme auf die Zeichnung.

Es zeigt:

Fig. 1 eine Seitenansicht des erfindungsgemäßen Hubfahrzeuges;

Fig. 2 eine Draufsicht von oben auf das Hubfahrzeug gemäß Fig. 1; und

Fig. 3 eine Fig. 1 entsprechende Ansicht, wobei das erfindungsgemäße Hubfahrzeug in verschiedenen Betriebszuständen dargestellt ist.

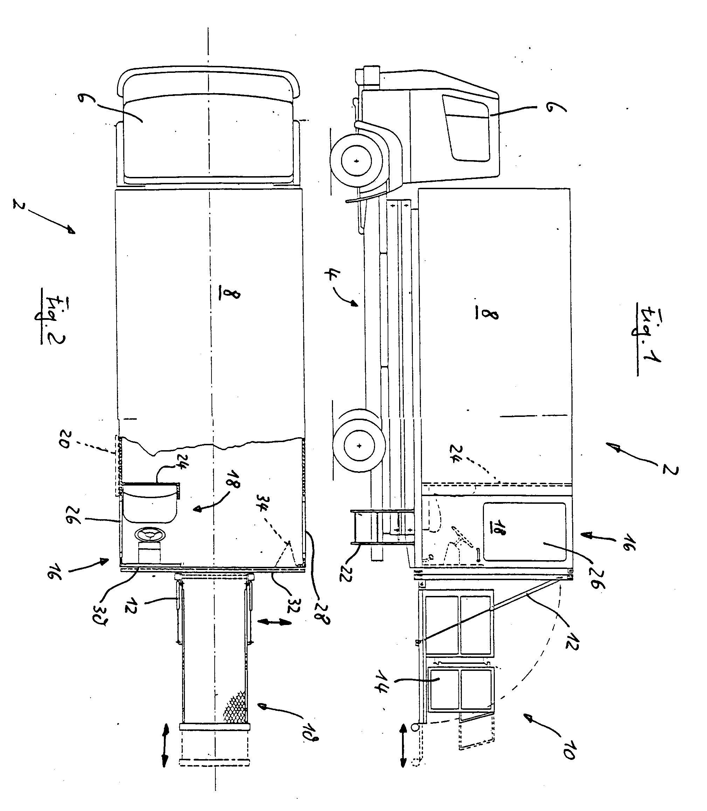

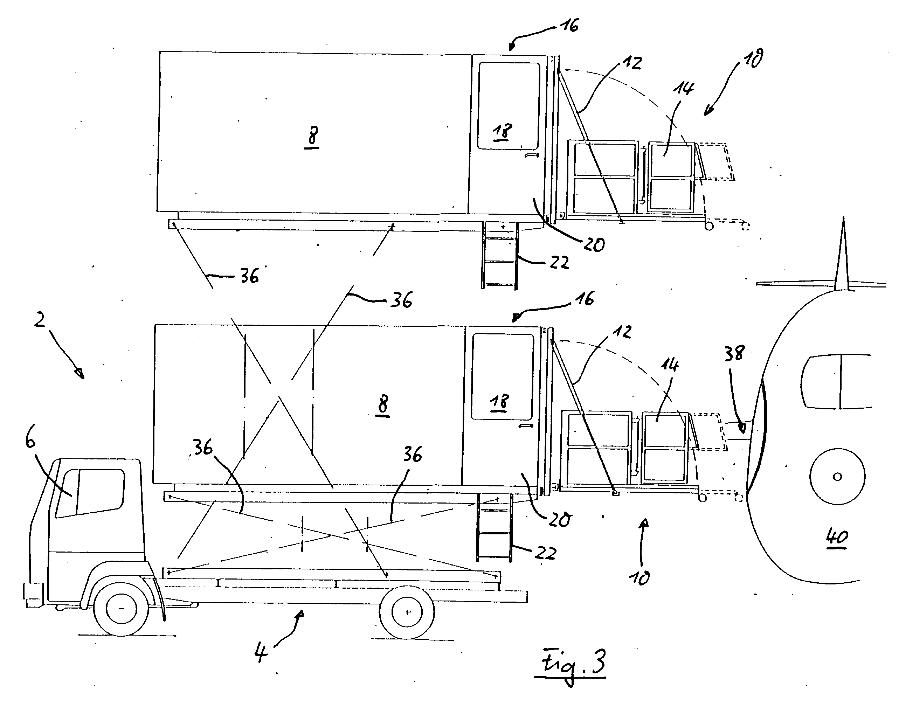

Gemäß den Fig. 1 bis 3 weist ein erfindungsgemäßes Hubfahrzeug 2 zur Containerverladung in Flugzeuge durch eine Ladeöffnung im Flugzeugrumpf ein serienmäßig ausgebildetes Fahrgestell 4 mit einem nicht näher dargestellten Antriebsblock sowie eine ebenfalls serienmäßig ausgebildete Fahrerkabine 6 auf. Ferner weist die gemäß der Zeichnung dargestellte Ausführungsform des Hubfahrzeuges 2 einen höhenverstellbar auf dem Fahrgestell 4 abgestützten Koffer 8 auf. Anstelle des Koffers 8 der zur Aufnahme des zu verladenden Gutes dient kann auch eine Lade-Plattform vorgesehen sein. Heckseitig ist an dem Koffer 8 eine Ladebühne 10 angeordnet, über die sowohl die Beladung des Koffers 8 als auch die Beschickung des Flugzeuges mit in dem Koffer 8 transportierten Gut erfolgt. Die Ladebühne 10 kann durch eine geeignete Hydraulikvorrichtung 12 aus einer vertikalen Schließstellung in eine horizontale Be- und Entladestellung und zurück geschwenkt werden. In der horizontalen Stellung wird der Arbeitsbereich auf der Ladebühne 10 durch ein ausklappbares Geländer 14 abgesichert. Um eine größtmögliche Flexibilität zu erlangen, ist die Ladebühne 10 relativ zu dem Koffer 8 entlang der Rückseite des Koffers 8 verschiebbar, wie in Fig. 2 durch den Doppelpfeil dargestellt. Weiterhin kann die Ladebühne 10 noch um einen gewissen Betrag ausgefahren werden, wie durch die Doppelpfeile in Fig. 1 und 2 veranschaulicht ist.

Der Koffer 8 ist kastenförmig ausgebildet und weist in der dargestellten Ausführungsform einen Teilbereich 16 auf, in dem ein Hilfs-Fahrerstand 18 angeordnet ist. Der Hilfs-Fahrerstand 18 ist mit allen nötigen Bedienungselementen ausgestattet, d.h. er weist neben einem Fahrersitz ein Lenkrad, die erforderliche Pedalerie, Bedienungselemente für Licht, Arbeitshydraulik etc. auf. Der Hilfs-Fahrerstand 18 ist von außen über eine Schiebetüre 20 und eine Leiter 22 zugänglich. Eine Trennwand 24 trennt den Hilfs-Fahrerstand zum großteil vom Innenraum des Koffers 8 ab. In der Schiebetüre 20 ist ein Fenster 26 angebracht und auf der der Schiebetüre 20 gegenüberliegenden Seite des Kastens 8 ist ein weiteres Fenster 28 eingelassen. In Blickrichtung des Fahrers, der sich in dem Hilfs-Fahrerstand 18 befindet, ist ein weiteres Fenster 30 angeordnet, so daß dem Fahrer ein relativ ungehinderter Blick nach links, vorne und rechts (jeweils bezogen auf seine Sitzposition) gewährt wird. Eine Ladeluke 32 am rückwärtigen Ende des Koffers, innerhalb deren Breite sich die Ladebühne 10 verschieben läßt, kann durch eine in Fig. 2 angedeutete Falttür 34 verschlossen werden.

Fig. 3 zeigt, wie der Koffer 8 durch ein allgemein bekanntes Scherengestänge 36 aus einer Höhe gemäß Fig. 1 anhebbar ist, so daß die Höhe der Ladebühne 10 über Grund an die Höhe einer Ladeluke 38 eines schematisch dargestellten Flugzeuges 40 anpaßbar ist. In der Darstellung gemäß Fig. 3, in der zwei Höhenlagen des Koffers 8 dargestellt sind, entspricht die untere Höhenlage in etwa der beim Be- und Entladen eines kleineren Flugzeuges und die obere Höhenlage des Koffers 8 entspricht der beim Be-und Entladen eines Großraumflugzeuges. Die Höhenlage der Ladebühne 10 in der Stellung gemäß Fig. 1 entspricht im wesentlichen der Rampenhöhe einer Lagerhalle oder dergleichen.

Wie insbesondere aus Fig. 3 hervorgeht, sind die bisher bekannten Probleme dahingehend, daß die Fahrerkabine 6 das Be- und Entladen durch eine an der Vorderseite des Koffers 8 angebrachte Ladebühne behindert, vollständig gelöst. Bisher machten diese Probleme nicht unerhebliche Umbaumaßnahmen an einem serienmäßig gelieferten Lkw-Chassis, insbesondere im Bereich der Fahrerkabine 6 nötig. Gemäß Fig. 3 erfolgt das Be- und Entladen des Flugzeuges 40 mittels des Koffers 8 ausschließlich über die am rückwärtigen Ende angeordnete Ladebühne 10, so daß von daher keinerlei Umbaumaßnahmen an dem Chassis nötig sind, da in diesem Bereich keine Teile eines serienmäßigen Lkw-Chassis vorhanden sind, die entfernt oder verändert werden müßten.

Im Einsatz wird das Hubfahrzeug 2 in einer Stellung gemäß Fig. 1 rückwärts an eine Verladerampe oder dergleichen manövriert (was problemlos zu bewerkstelligen und auch zulässig ist) und dann über die heruntergelassene Ladebühne 10 beladen. Das Hubfahrzeug 2 fährt dann in den Bereich des zu versorgenden Flugzeuges 40, wo dann entweder der Fahrer selbst oder eine zweite Bedienungsperson den Hilfs-Fahrerstand 18 einnimmt. Durch geeignete Maßnahmen läßt sich erreichen, daß die "Befehlsgewalt" über das Hubfahrzeug 2 von der eigentlichen Fahrerkabine 6 auf den Hilfs-Fahrerstand 18 übertragen wird. Das Hubfahrzeug 2 läßt sich nun von dem Hilfs-Fahrerstand 18 aus wie ein Fahrzeug mit Hinterachslenkung und aus der Sicht der Bedienungsperson in dem Hilfs-Fahrerstand 18 vorwärts fahrend im Rückwärtsgang an das Flugzeug 40 heranmanövrieren. Hierbei ist wesentlich, daß eine Drehbewegung des Lenkrades in dem Hilfs-Fahrerstand zu der Drehbewegung des Lenkrades in der Fahrerkabine 6 genau entgegengesetzt ist, so daß sich das Hubfahrzeug wie ein echtes Fahrzeug mit Hinterachslenkung verhält, d.h., eine Drehbewegung des Hilfs-Lenkrades nach rechts führt zu einer Kurvenfahrt des Hubfahrzeuges nach rechts und umgekehrt.

Dadurch, daß aus Sicht des Fahrers im Hilfs-Fahrerstand 18 das Hubfahrzeug 2 eine Hinterachslenkung hat, kann ein äußerst genaues und präzises Manövrieren auch auf engstem Raum erfolgen. Ist eine korrekte vertikale Postition des Hubfahrzeuges 2 unterhalb der Ladeluke 38 erreicht, wird deren Koffer 8 über das Scherengestänge 36 höhenverfahren, wobei vorher noch gegebenenfalls eine Feststellbremse des Hubfahrzeuges 2 betätigt wird und hydraulische Seitenstützer ausgefahren werden können. Die Verbindung zwischen dem Hilfs-Fahrerstand 18 und chassisfesten Elementen wie Lenkung, Getriebe, Gaszug, Bremsen oder dergleichen erfolgt über flexible Übertragungselemente wie z.B. elektrische Kabel, Bowdenzüge, Hydraulikschläuche oder dergleichen, so daß auch bei einer Anhebung des Koffers 8 eine Steuer- und Kontrollverbindung zwischen dem Hilfs-Fahrerstand 18 und dem Hubfahrzeug 2 aufrechterhalten bleibt. Da vorteilhafterweise der Hilfs-Fahrerstand 18 zusammen mit dem Koffer 8 oder auch einer Plattform angehoben wird, hat die Bedienungsperson in dem Hilfs-Fahrerstand 18 stets einen optimalen Überblick und kann gegebenenfalls die vertikale Lage des Hubfahrzeuges 2 unter der Ladeluke 38 durch kleine Lenkkorrekturen noch besser ausrichten. Hat die Unterkante des Koffers 8 die Höhenlage der Unterkante der Ladeluke 38 erreicht, wird der Hubvorgang angehalten und der Koffer 8 in der erreichten Höhenlage verriegelt. Durch Betätigung der Hy draulikvorrichtung 12 wird dann die Ladebühne 10 in die ausgeschwenkte Position gebracht und an die Ladeluke 38 heranmanövriert. Sodann erfolgt das Be- und Entladen des Frachtraumes des Flugzeuges 40 bzw. des Koffers 8. Nach abgeschlossenem Versorgungsvorgang wird der Koffer 8 wieder in die Ausgangslage gemäß Fig. 1 gebracht, wobei die eben geschilderten Schritte in umgekehrter Reihenfolge ablaufen.

Insoweit zusammenfassend ergibt das Hubfahrzeug gemäß der vorliegenden Erfindung die folgenden wesentlichen Vorteile:

- Durch das Vorsehen des Hilfs-Fahrerstandes 18, von dem aus die Original-Fahrbedienungselemente fernbedient werden können, kann die wirtschaftliche Anordnung der Original-Fahrbedienungselemente eines Serien-Lkws beibehalten werden und zugleich wird ohne verbotenes Rückwärtsanfahren an das Flugzeug 40 durch eine effektive Hinterradlenkung eine äußerst präzise Manövrierfähigkeit erreicht.

- Die Rampenbeladung des Hubfahrzeuges 2 und die Flugzeugbeladung erfolgen durch ein- und dieselbe Ladeluke 32 in dem Koffer 8. Hierdurch entfällt die aufwendige frontseitige Übergabe-Plattform, die bisher zur Beladung des Flugzeuges über das Führerhaus des Hubfahrzeuges 2 hinweg erforderlich war.

- Es können auch kleinere Flugzeugtypen mit Ladehöhen niederer als das Dach der Fahrerkabine 6 des Hubfahrzeuges 2 beladen werden, ohne daß hierbei die Fahrerkabine 6 aufwendig modifiziert werden muß.

- Da der Hilfs-Fahrerstand vorzugsweise zusammen mit dem Koffer 8 zur Übergabe der Container in das Flugzeug mit hochgehoben wird, kann eine Bedienungsperson in dem Hilfs-Fahrerstand 18 den Andock-Vorgang genau beobachten und gegebenenfalls korrigierend eingreifen.

Um die Arbeitsbedingungen der Bedienungsperson in dem Hilfs-Fahrerstand 18 insbesondere bei Nacht und im Winter zu verbessern, kann eine elektrische Innenbeleuchtung des Koffers 8 und auch eine Heizung in dem Teilbereich 16 vorgesehen werden, wobei die Heizung vorteilhafterweise als Standheizung ausgeführt sein sollte.

## Patentansprüche

1. Hubfahrzeug (2) zur Containerverladung in Flugzeuge durch eine Ladeöffnung im Flugzeugrumpf hindurch, mit einem oder einer höhenverstellbar auf einem Fahrgestell (4) eines vorzugsweise serienmäßigen Lastkraftwagens abgestützten Koffer oder Plattform, dadurch gekennzeichnet, daß im Heckbereich des Koffers (8) bzw. der Plattform ein Hilfs-Fahrerstand (18) angeordnet ist, dessen Betätigungshandhaben mit Blick der Bedienungsperson auf den Bereich hinter dem Hubfahrzeug (2) bedienbar und mit fahrgestellfesten Antriebsaggregaten des Hubfahrzeuges (2) mittels Ansteuerleitungen verbunden sind, wobei die Richtung eines mittels einer Lenkvorrichtung in dem Hilfs-Fahrerstand (18) erzielbaren Lenkausschlags an den lenkbaren Rädern des Fahrgestells (4) bezüglich derjenigen, die mittels einer Lenkvorrichtung in der Fahrerkabine (6) erzielbar ist, invertiert ist.

2. Hubfahrzeug nach Anspruch 1, dadurch gekennzeichnet, daß die Lenkvorrichtung in der Fahrerkabine (6) und in dem Hilfs-Fahrerstand (18) ein Lenkrad aufweist.

3. Hubfahrzeug nach Anspruch 1 oder 2, dadurch gekennzeichnet, daß der Hilfs-Fahrerstand (18) zusammen mit dem Koffer (8) oder der Plattform höhenverfahrbar ist.

4. Hubfahrzeug nach Anspruch 1, dadurch gekennzeichnet, daß der Hilfs-Fahrerstand (18) vom Innenraum des Koffers (8) durch eine Trennwand (24) zumindest teilweise abgetrennt ist.

5. Hubfahrzeug nach einem der Ansprüche 1 bis 4, dadurch gekennzeichnet, daß der Hilfs-Fahrerstand (18) von der Außenseite des Koffers (8) her durch eine Schiebetüre (20) begehbar ist.

6. Hubfahrzeug nach einem der Ansprüche 1 bis 5, dadurch gekennzeichnet, daß der Hilfs-Fahrerstand (18) mit wenigstens einem Seitenfenster (26, 28) ausgestattet ist.

7. Hubfahrzeug nach einem der Ansprüche 1 bis 6, dadurch gekennzeichnet, daß der Hilfs-Fahrerstand (18) eine separate elektrische Beleuchtung aufweist.

8. Hubfahrzeug nach Anspruch 5, dadurch gekennzeichnet, daß der Koffer (8) oder die Plattform zusammen mit dem Hilfs-Fahrerstand (18) nur dann anhebbar bzw. absenkbar ist, wenn die Schiebetüre (20) geschlossen ist.

9. Hubfahrzeug nach einem der vorhergehenden Ansprüche, dadurch gekennzeichnet, daß der Hilfs-Fahrerstand (18) beheizbar ist.

10. Hubfahrzeug nach Anspruch 9, dadurch gekennzeichnet, daß zur Beheizung eine Standheizung vorgesehen ist.

## Claims

1. Vertical-lift vehicle (2) for loading containers in aircraft through a cargo opening in the fuselage with a height-adjustable trunk or platform mounted on a chassis (4) of a preferably standard lorry, characterised in that, at the rear of the trunk (8) or platform, there is an auxiliary driver's stand (18) whose controls can be operated by the operator giving him a view of the area behind the vertical-lift vehicle (2) and having drive units mounted on the chassis of the vertical-lift vehicle (2) that are connected via control, the direction of the steering lock of the steerable wheels of the chassis (4) that is obtained by using a steering device in the auxiliary driver's stand (18) being the reverse of that obtained by using a steering device in the driver's cab (6).

2. Vertical-lift vehicle according to claim 1, characterised in that the steering device in the driver's cab (6) and in the auxiliary driver's stand (18) has a steering wheel.

3. Vertical-lift vehicle according to claim 1 or 2 characterised in that the auxiliary driver's stand (18) is height adjustable together with the trunk (8) or platform.

4. Vertical-lift vehicle according to claim 1 characterised in that the auxiliary driver's stand (18) is separated at least partially from the interior space of the trunk (8) by a partition (24).

5. Vertical-lift vehicle according to one of claims 1 to 4, characterised in that the auxiliary driver's stand (18) can be entered through a sliding door (20) from outside the trunk (8).

6. Vertical-lift vehicle according to one of claims 1 to 5, characterised in that the auxiliary driver's stand (18) is equipped with at least one side-window (26, 28).

7. Vertical-lift vehicle according to one of claims 1 to 6, characterised in that the auxiliary driver's stand (18) has separate electric lighting.

8. Vertical-lift vehicle according to claim 5, characterised in that the trunk (8) or platform together with the auxiliary driver's stand (18) can only be raised or lowered if the sliding door (20) is closed.

9. Vertical-lift vehicle according to one of the above claims characterised in that the auxiliary driver's stand (18) can be heated.

10. Vertical-lift vehicle according to claim 9, characterised in that auxiliary heating is provided for heating purposes.

**Revendications**

1. Véhicule de levage (2) pour le chargement de conteneurs dans des avions en passant par une ouverture de chargement pratiquée dans le fuselage de l'avion, muni d'un coffre ou d'une plate-forme que l'on peut soulever et qui s'appuie sur le châssis (4) d'un camion, de préférence, monté en série,
**caractérisé en ce que**
dans la zone de coins du coffre (8) ou de la plate-forme, est disposé un poste auxiliaire (18) destiné au conducteur, dont les manettes de commande peuvent être commandées lorsque la personne préposée à la manoeuvre regarde dans la direction située derrière le véhicule de levage (2) et qui sont reliées au moyen de conduits d'amorçage à l'équipement moteur du véhicule de levage (2) solidaire du châssis, la direction d'une déviation par braquage quant aux roues orientables du châssis (4), que l'on peut atteindre dans le poste auxiliaire (18) destiné au conducteur au moyen d'un dispositif de braquage, est inversée par rapport à celle que l'on peut atteindre au moyen d'un dispositif de braquage dans la cabine du conducteur (6).

2. Véhicule de levage selon la revendication 1, **caractérisé en ce que** le dispositif de braquage dans la cabine du conducteur (6) et dans le poste auxiliaire (18) destiné au conducteur, présente un volant de direction.

3. Véhicule de levage selon la revendication 1 ou 2, **caractérisé en ce que** le poste auxiliaire (18) destiné au conducteur peut se soulever conjointement avec le coffre (8) ou la plate-forme.

4. Véhicule de levage selon la revendication 1, **caractérisé en ce que** le poste auxiliaire (18) destiné au conducteur est séparé au moins partiellement de l'espace interne du coffre (8) par une paroi de séparation (24).

5. Véhicule de levage selon l'une quelconque des revendications 1 à 4, **caractérisé en ce qu'**on peut pénétrer dans le poste auxiliaire (18) destiné au conducteur depuis l'extérieur du coffre (8), en passant par une porte coulissante (20).

6. Véhicule de levage selon l'une quelconque des revendications 1 à 5, **caractérisé en ce que** le poste auxiliaire (18) destiné au conducteur est muni d'au moins une fenêtre latérale (26, 28).

7. Véhicule de levage selon l'une quelconque des revendications 1 à 6, **caractérisé en ce que** le poste auxiliaire (18) destiné au conducteur présente un éclairage électrique séparé.

8. Véhicule de levage selon la revendication 5, **caractérisé en ce que** le coffre (8) ou la plate-forme ne peut se soulever ou s'abaisser conjointement avec le poste auxiliaire (18) destiné au conducteur que lorsque la porte coulissante (20) est fermée.

9. Véhicule de levage selon l'une quelconque des revendications précédentes, **caractérisé en ce qu'**on peut chauffer le poste auxiliaire (18) destiné au conducteur.

10. Véhicule de levage selon la revendication 9, **caractérisé en ce que**, pour le chauffage, on prévoit un chauffage auxiliaire.

Fig. 1

Fig. 2

fig. 3